# EUROPEAN PATENT APPLICATION

(11) **EP 0 677 670 A1**
(43) Date of publication of application: **18.10.1995**
(21) Application number: 95301569.0
(22) Date of filing: 10.03.1995
(51) Int. Cl.: F16C 3/03

(54) **Driving shaft and method and apparatus for producing the same**

(30) Priority: 17.03.1994 JP 647067/94
(71) Applicant: MATSUI UNIVERSAL JOINT MANUFACTURING COMPANY, Tokyo (JP)
(72) Inventor: Yaegashi, Toshihiko, Matsui Univ. Joint Manuf. Co., Tokyo, Yukiko Iwai (JP); Sagara, Minoru, Matsui Univ. Joint Manuf. Co., Tokyo, Yukiko Iwai (JP)
(74) Representative: Palmer, Roger

(57) **Abstract**

A driving shaft having a spline toothed hollow male shaft (21) and a spline toothed female shaft (26). The hollow male shaft (21) comprises a generally cylindrical extension (23) located at the forward end of the hollow male shaft (21) and having a diameter less than the smaller or inner diameter of spline teeth (22) of the hollow male shaft (21). Such an extension increases the strength of the forward end of the spline toothed portion (22) of the hollow male shaft (21). For further improvement of the strength, the extension is provided with a closed end wall. An opening formed in the end wall facilitates sliding movements of the male and female shafts (21,26).

## Description

This invention relates to a driving shaft including hollow male and female shafts having spline teeth, and a method and an apparatus for producing the driving shaft.

In producing the hollow male shaft 1 of such a driving shaft in the past, after the male shaft has been formed with spline teeth by the use of male and female dies, the forward end lb of the larger diameter portion la of spline teeth of the male shaft is, in general, tapered or beveled in a chamfering process in order to make it easy to fit the male shaft into a female shaft mating therewith.

The spline toothed portion of a male shaft is usually positioned at the forward end of the shaft body and thus supported as a cantilever on the shaft body. When the male and female shafts with their spline teeth in mesh with each other are rotated as a unitary body, the splined portion of the male shaft is subjected to torsional loads. Particularly, as the forward end of the spline toothed portion of the hollow male shaft is the distal end of a cantilever, a greater torque of the torsional load is applied to the forward end of the hollow male shaft which has been chamfered as described above so as to lower its strength to cause considerable wear and deformation.

It is an object of the invention to at least partly mitigate the above difficulties.

An embodiment of the invention provides a driving shaft whose hollow male shaft is improved in strength at the forward end of its splined portion to eliminate the disadvantage of the splined male shaft of the prior art and to provide a method and an apparatus for producing such an improved driving shaft.

According to one aspect of the present invention, the driving shaft including spline toothed hollow male and female shafts comprises a generally cylindrical extension located at the forward end of said hollow male shaft and having a diameter less than the smaller diameter of spline teeth of the hollow male shaft.

In another aspect of the invention, the method for producing a driving shaft including spline toothed hollow male and female shafts comprises steps of locating a cylindrical blank in a male die for said follow male shaft, said male die including a spline tooth die part and a generally cylindrical extension die part adjacent the forward end of said spline tooth die part and having a diameter less than the smaller diameter of said spline tooth die part; and forcing said male die with said cylindrical blank into a female die for said hollow male shaft, said female die having a cavity supplementary in shape with said male die with uniform clearances in radial directions, thereby press-forming said cylindrical blank into a hollow male shaft.

In a further aspect of the invention, the apparatus for producing a driving shaft including spline toothed hollow male and female shafts comprises a male die for the hollow male shaft, said male die having a spline tooth die part and a generally cylindrical extension die part adjacent the forward end of said spline tooth die part and having a diameter less than the smaller diameter of said spline tooth die part; a female die for the hollow male shaft, said female die having a cavity supplementary in shape with said male die with uniform clearances in radial directions; die clamping and moving means for moving said male and female dies relative to each other in axial directions of these dies and said cavity; and die withdrawing means.

With the driving shaft produced by the method and apparatus according to the invention, the reduced diameter cylindrical extension provided on the forward end of the hollow male shaft serves to compress or concentrate toward its center axis the forward end of the spline toothed portion supported as a cantilever by the male shaft body, so that the forward end of the spline toothed portion is reinforced to increase its mechanical strength.

The invention will be more fully understood by referring to the following detailed specification and claims taken in connection with the appended drawings.
Fig. 1 is a longitudinal sectional view of the hollow male shaft of a driving shaft of the prior art;
Fig. 2 is a schematic explanatory view illustrating a cylindrical blank prior to the press-forming by means of the apparatus for carrying out the method according to the invention;
Fig. 3 is a schematic explanatory view illustrating the cylindrical blank of one embodiment of the invention, which has been press-formed by means of the apparatus for carrying out the method according to the invention;
Fig. 4a is an end view of the hollow male shaft of a driving shaft of another embodiment of the invention, produced by the method according to the invention;
Fig. 4b is a longitudinal sectional view of the hollow male shaft shown in Fig. 4a; and
Fig. 5 is a schematic explanatory view illustrating a fitted state of the hollow male shaft shown in Fig. 4b with a female shaft of the driving shaft.

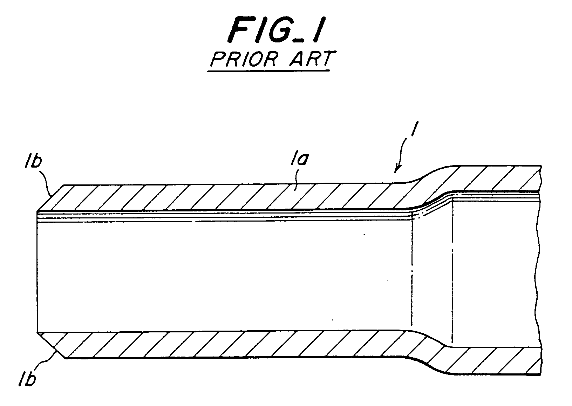

The hollow male shaft of the prior art shown in Fig. 1 also substantially corresponds in configuration to a male shaft before being press-formed by means of the apparatus for carrying out the method for producing the driving shaft according to the invention.

A male die 3 for a hollow male shaft, which is a part of the apparatus 2 for producing the driving shaft according to the invention, comprises a spline tooth die part 4 and a generally cylindrical extension die part 5 adjacent the forward end of the die part 4 and having a diameter less than the smaller or inner diameter of the spline teeth. The transition between the spline tooth die part 4 and the extension die part 5 is rounded or made round and the forward end of the extension die part 5 is also rounded or made round along its periphery.

A female die 6 for the hollow male shaft, which is also a part of the apparatus 2 for producing the driving shaft according to the invention, has a cavity 7 supplementary in shape with the male die 3 with uniform clearances in radial directions. A carriage 8 for the male die 3 is provided as die clamping and moving means for moving these male and female dies relative to each other in the axial directions of these dies and the cavity 7. Moreover, the female die 6 is provided with a die withdrawing pin 9 as die withdrawing means movable in the axial directions of the cavity 7.

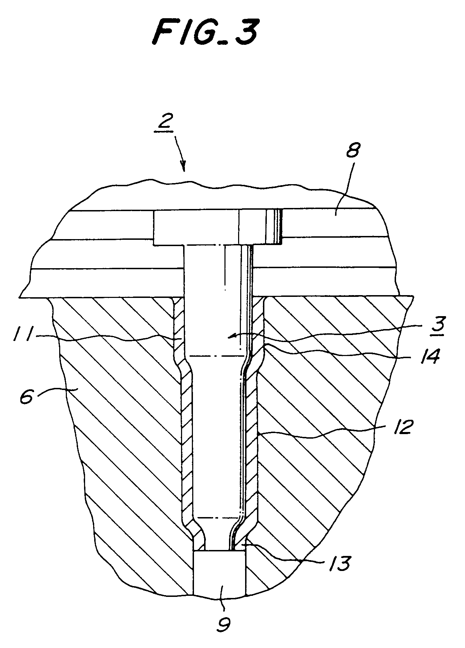

In using the apparatus for producing the driving shaft according to the invention, first a cylindrical blank 10 is located in the male die 3, and the male die 3 with the blank 10 is forced into the cavity 7 of the female die 6 so as to press-form the blank 10 into a hollow male shaft 11 of the driving shaft according to the invention as shown in Fig. 3.

The hollow male shaft 11 of the driving shaft formed by the method and apparatus according to the invention has a substantially cylindrical extension 13 adjacent the forward end of the spline toothed portion 12 and having a diameter less than the larger or outer diameter of the spline teeth. Moreover, the transition between the spline toothed portion 12 and the extension 13 is naturally rounded or made round by the press-forming. Further, the forward end of the extension 13 is preferably rounded along its periphery.

According to the invention, the reduced diameter cylindrical extension 13 serves to compress or concentrate toward its center axis the forward end of the spline toothed portion 12 supported as a cantilever by the male shaft body 14 (maximum diameter portion) and therefore to increase the strength of the forward end of the spline toothed portion.

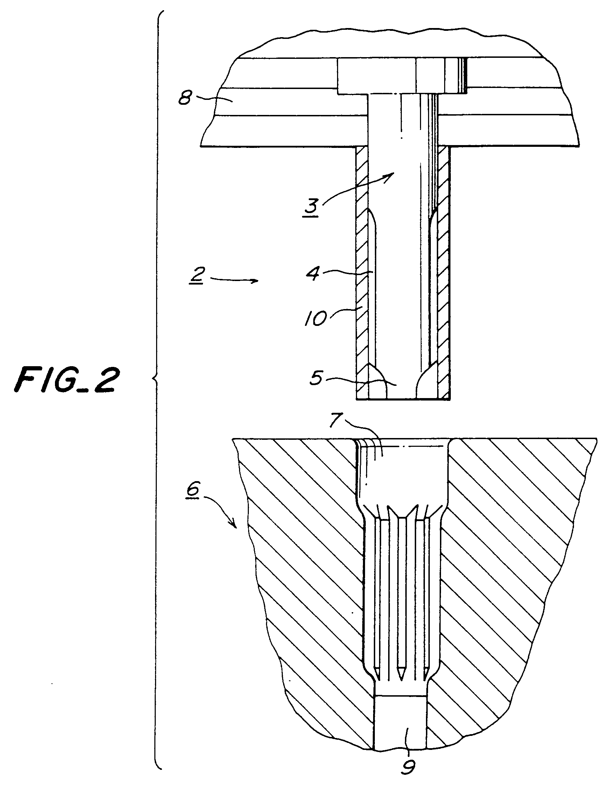

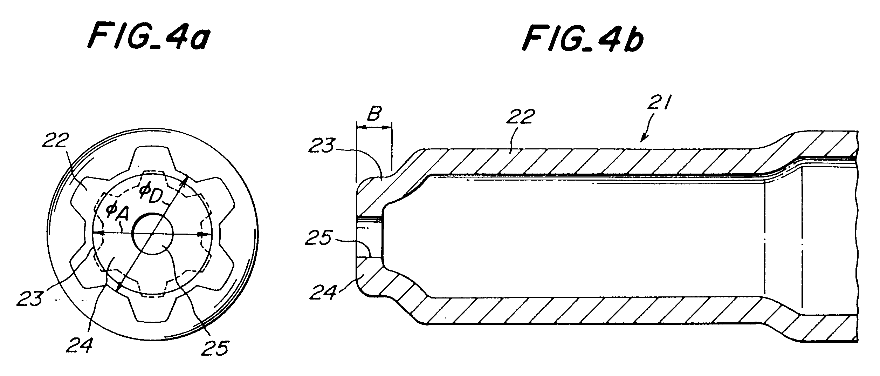

While the hollow male shaft 11 is formed from the cylindrical blank 10 open at its forward end in the embodiment shown in Figs. 2 and 3, it may be formed from a bottomed blank having a closed end. Fig. 4 illustrates a hollow male shaft 21 formed from such a bottomed blank. The hollow male shaft 21 has a substantially cylindrical extension 23 having a short length B and a reduced diameter (φA) at the forward end of the spline toothed portion 22 (smaller diameter of the teeth is φD). In this case, φA is smaller than φD (φA < φD). The extension 23 has an end wall 24.

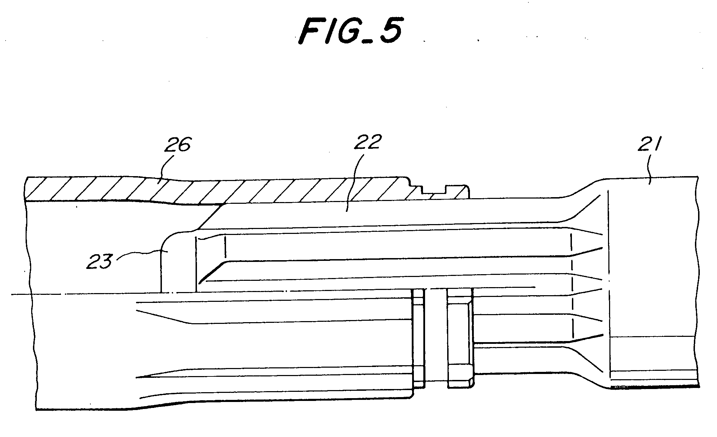

With the hollow male shaft 21 formed from the bottomed blank, the strength at the forward end of the spline toothed portion 22 is more improved. In the embodiment shown in Fig. 4, the end wall 24 of the hollow male shaft 21 is further formed with a center opening 25 which allows the communication of the internal space in the hollow male shaft 11 with the external space to facilitate the axial sliding movements of the male and female shafts 21 and 26 (Fig. 5).

According to the invention, the spline toothed portion of a hollow male shaft is provided at its forward end with the reduced diameter short length extension to obtain a significant effect increasing the strength of the forward end of the spline toothed portion supported as a cantilever by the main body of the hollow male shaft and hence subjected to greater torsional torque. Moreover, by the increase of the mechanical strength, it becomes possible to make thinner the hollow male shaft and also to fulfil the requirement for light-weight. According to the invention, furthermore, the reduced diameter cylindrical extension is formed by press-forming so that the transition between the spline toothed portion and the extension is smoothly rounded to facilitate coupling of the male shaft with the female shaft.

While the invention has been particularly shown and described with reference to preferred embodiments thereof, it will be understood by those skilled in the art that the foregoing and other changes in form and details can be made therein without departing from the spirit and scope of the invention.

## Claims

1. A driving shaft including spline toothed hollow male and female shafts, comprising a generally cylindrical extension located at the forward end of said hollow male shaft and having a diameter less than the smaller diameter of spline teeth of the hollow male shaft.

2. The driving shaft as set forth in claim 1, wherein the forward end of said cylindrical extension of said hollow male shaft has a closed end wall.

3. The driving shaft as set forth in claim 2, wherein said closed end wall is provided with a center opening.

4. The driving shaft as set forth in any one of claims 1 to 3, wherein the transition between said extension and the forward end of said hollow male shaft is rounded at its corner.

5. The driving shaft as set forth in any one of claims 1 to 4, wherein the forward end of said extension is rounded along it outer periphery.

6. A method for producing a driving shaft including spline toothed hollow male and female shafts, comprising steps of:
locating a cylindrical blank in a male die for said hollow male shaft, said male die including a spline tooth die part and a generally cylindrical extension die part adjacent the forward end of said spline tooth die part and having a diameter less than the smaller diameter of said spline tooth die part; and
forcing said male die with said cylindrical blank into a female die for said hollow male shaft, said female die having a cavity supplementary in shape with said male die with uniform clearances in radial directions, thereby press-forming said cylindrical blank into a hollow male shaft.

7. An apparatus for producing a driving shaft including spline toothed hollow male and female shafts, comprising:
a male die for the hollow male shaft, said male die having a spline tooth die part and a generally cylindrical extension die part adjacent the forward end of said spline tooth die part and having a diameter less than the smaller diameter of said spline tooth die part;
a female die for the hollow male shaft, said female die having a cavity supplementary in shape with said male die with uniform clearances in radial directions;
die clamping and moving means for moving said male and female dies relative to each other in axial directions of these dies and said cavity; and
die withdrawing means.
